# EUROPÄISCHE PATENTSCHRIFT

(11) **EP 2 369 116 B1**
(45) Veröffentlichungstag und Bekanntmachung des Hinweises auf die Patenterteilung: **22.03.2017**
(21) Anmeldenummer: 11155828.4
(22) Anmeldetag: 24.02.2011
(51) Int. Cl.: E06B 3/62, E06B 7/23, B29C 65/74

(54) **Dichtungsprofil**
Seal profile
Profil d'étanchéité

(30) Priorität: 23.03.2010 DE 202010000444 U
(43) Veröffentlichungstag der Anmeldung: 28.09.2011
(73) Patentinhaber: SCHÜCO International KG, 33609 Bielefeld (DE)
(72) Erfinder: Hanke, Carsten, 33729 Bielefeld (DE)
(74) Vertreter: Specht, Peter

(56) Entgegenhaltungen:
- EP-A1- 1 136 297
- EP-A2- 1 835 121
- DE-A1-102008 034 347
- DE-C1- 4 201 340

## Beschreibung

Die Erfindung betrifft ein Dichtungsprofil nach dem Oberbegriff des Anspruchs 1.

Ein derartiges Dichtungsprofil ist aus der EP 0 611 870 B9 bekannt. Die Fig. 2 dieser Schrift zeigt das Dichtungsprofil im montierten Zustand als Dichtung zwischen einem Rahmenprofil und einem Flächenelement wie einer Glasscheibe.

Aus der EP 1136297 ist ein weiteres gattungsgemäßes Verglasungs-Dichtungsprofil bekannt, bei der eine Dichtlippe und ein Dichtwulst vorgesehen sind, wobei der Dichtwulst einen Schaumkern besitzt. Der Schaumkern ist dabei von einer Ummantelung aus einem witterungsbeständigen thermoplastischen Elastomer umgeben, aus dem auch die Dichtlippe ausgebildet ist, was die Elastizität des Dichtwulstes erhöht.

Die DE 20 2007 016 186 offenbart ein elastisches Dichtungsprofil, das auf einer Seite gegenüber einer Haltenut einen Dichtungssteg und einen Stützsteg aufweist. Der Dichtungssteg ist wulstförmig ausgebildet und umfasst eine ganz oder teilweise geschlossene Hohlkammer mit einer Füllung aus Moosgummi. Zwar kann dadurch ebenfalls die Elastizität des Dichtwulstes erhöht werden, die Wärmeisolierung soll aber noch weiter optimiert werden.

Eine weitere bekannte Dichtung zeigt die DE 20 2007 015 094. Aus dieser Schrift ist es bekannt, den Dichtfuß und den Rand der Dichtung zu der dem Wetter ausgesetzten Seite aus einem härteren Material zu fertigen und den dazwischen liegenden Material aus einem weicheren Material.

Aus der DE 10 2008 034 347, der DE 10 2006 027 607 A1 und der DE 298 13 471 U1 ist es jeweils bekannt, in einem aus zwei Materialbereichen bestehenden Dichtungsprofil einen Druckübertragungswulst auszubilden, welcher in montierter Stellung die Abstützung an der Scheibe und dem Profil herstellt, der sich aber andererseits auch die Wärmedämmwirkung nachteilig auswirkt.

Vor diesem Hintergrund ist es die Aufgabe der vorliegenden Erfindung, ein Dichtungsprofil mit einer guten Wärmedämmwirkung zu schaffen, welches zudem bei der Montage gut handhabbar ist und auch nach längerem Einsatz noch eine gute Dichtwirkung aufweist.

Diese Aufgabe wird mit einem Dichtungsprofil mit den Merkmalen des Anspruches 1 gelöst.

Vorteilhafte Ausgestaltungen der Erfindung sind den Unteransprüchen zu entnehmen.

Durch das oder die derart "schwimmend" eingebrachten "Funktionsbänder" wird die Wärmedämmwirkung optimiert, da das Funktionsband anders als der bekannte Druckübertragungswulst vom Montagebereich der Dichtung thermisch getrennt wird..

Dennoch ergibt sich bei der Montage und auch im montierten Zustand eine sehr gleichmäßige Druckverteilung. Durch den konstruktiven Aufbau wird eine hohe Dichtwirkung (Höhe der Dichtung) bei gleichzeitig guter Biegefähigkeit (Herumlegen um Ecken) gewährleistet.

Die Zugstabilität kann durch einen optionalen Formschluß zwischen dem Funktionsband und dem dieses ganz oder abschnittsweise umgebenden Materialbereich erhöht werden.

Der weichere Materialbereich kann aus einem Schaummaterial gebildet sein, insbesondere aus elastischem Moosgummi, das durch Koextrusion zusammen mit dem thermoplastischen Elastomer hergestellt ist. Das thermoplastische Elastomer kann nach einer bevorzugten Variante aus EPDM (Ethylen-Propylen-Dien-Terpolymere) bestehen Auch andere thermoplastische Elastomere können eingesetzt werden.

Um das Dichtungsprofil auch in den Eckbereichen gut montieren zu können, ist es denkbar, an der Dichtlippe oder dem Dichtwulst eine Vielzahl von Einschnitten vorzusehen, so dass das Dichtungsprofil leicht biegbar ist.

Um die Wärmeisolierung weiter zu verbessern, kann an dem Dichtungsprofil an dem Dichtwulst auf der zur Dichtlippe gegenüberliegenden Seite eine weitere Dichtlippe ausgebildet sein, die einen Auslegersteg bildet. Dadurch wird der Bereich benachbart zu dem Dichtwulst durch den Auslegersteg überdeckt.

Die Materialbeschaffenheit wird einerseits durch das Material bzw. den Stoff selbst aber u.a. auch durch dessen Parameter wie insbesondere die Härte, die Dichte, die Wärmeleitfähigkeit, die Dehnbarkeit sowie auch die Frage, ob sich um ein geschäumtes oder nicht geschäumtes Material handelt, bestimmt.

Die Erfindung schafft auch ein Fensterelement wie einen Flügel oder eine Festverglasung oder eine Tür oder ein Fassaden- oder Lichtdachelement mit wenigstens einem Profil, einem Flächenelement und einem Dichtungsprofil nach einem der auf dieses gerichteten Ansprüche, welches zwischen dem Profil und dem Flächenelement angeordnet ist.

Die Erfindung wird nachfolgend anhand von Ausführungsbeispielen mit Bezug auf die beigefügten Zeichnungen näher erläutert. Es zeigen:
- Figur 1a-f: Querschnittsansichten verschiedener erfindungsgemäßer Dichtungsprofile;
- Figur 2a-c: Querschnittsansichten verschiedener weiterer erfindungsgemäßer Dichtungsprofile;
- Figur 3a-c: Seitenansichten von Einlagebändern für Dichtprofile; und
- Figur 4: einen Schnitt durch einen Pfostenbereich eines Fensters mit Dichtungsprofilen.

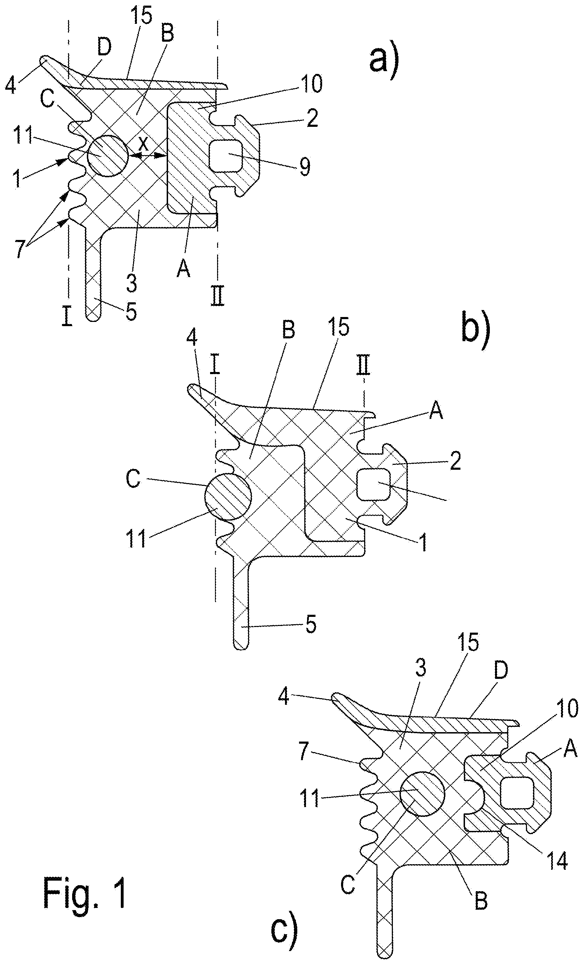

Die Fig. 1a - f zeigen Querschnittsansichten verschiedener Dichtungsprofile 1 einer ersten Bauart, denen gemeinsam ist, dass sie jeweils eine identische Randkontur aufweisen.

Jedes Dichtungsprofil 1 der Fig. 1a bis 1f weist jeweils als Montagebereich zur Montage an einem Profil einen Haltefuß 2 zum Eingriff in eine Nut des Profils auf. An den Haltefuß schließt sich direkt nach außen hin in Richtung eines Flächenelementes wie einer Isolierglasscheibe ein Dichtwulst 3 an, an dem eine oder mehrere Dichtlippen 4, 5 ausgebildet sind.

Als "Dichtwulst" 3 wird der Grundabschnitt des Dichtungsprofils 1 bezeichnet, der ein größeres Volumen einnimmt und daher eher wulstförmig ausgebildet ist als die schmaleren Dichtlippen 4, 5. Der Dichtwulst 3 weist zudem einen Anlagebereich 7 zur Anlage am Flächenelement eines Fensters, einer Tür oder dgl. auf, welcher hier wellenförmig konturiert gestaltet ist.

Der Haltefuß 2 ist federartig ausgestaltet und weist hier eine Hohlkammer 9 auf.

Jedes erfindungsgemäße Dichtungsprofil 1 weist im Querschnitt wenigstens drei oder mehr Bereiche A, B, C, D auf, von denen wenigstens ein Bereich B eine andere Materialbeschaffenheit aufweist als die weiteren Bereiche A, C, D.

Die zwei oder mehr weiteren Bereiche A, C, D können - müssen aber nicht zwingend - auch eine gleiche Materialbeschaffenheit aufweisen.

Die zwei oder mehr weiteren Bereiche A, C, D, ... gleicher Materialbeschaffenheit sind in Längsrichtung des Dichtungsprofils - d.h. senkrecht zur Blattebene - jedenfalls abschnittsweise oder durchgehend über die gesamte Länge des Dichtungsprofils vollständig voneinander getrennt bzw. zueinander beabstandet.

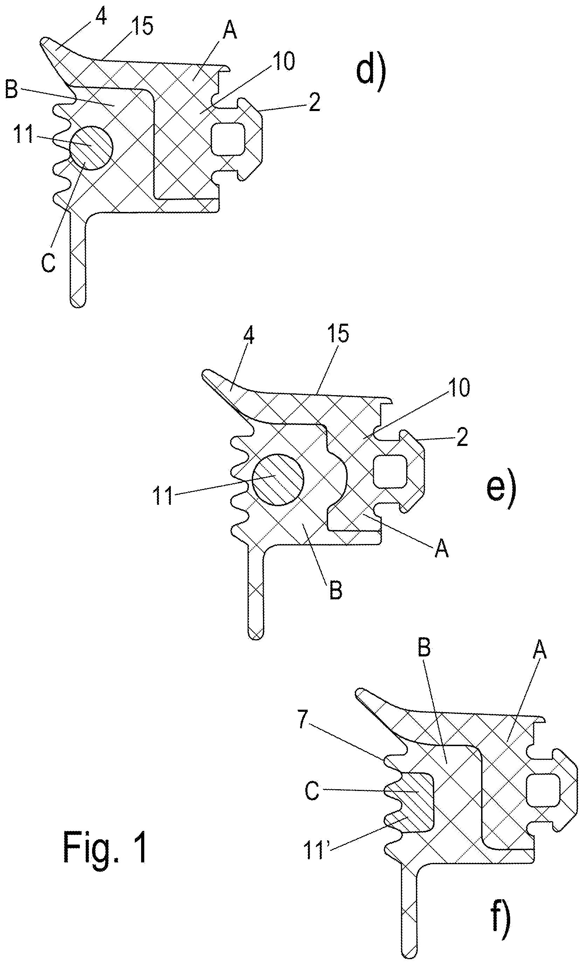

Die zwei oder mehr weiteren Bereiche A, C, D, ... sind nach Fig. 1 im Querschnitt vollständig voneinander getrennt, d.h., sie stoßen im Querschnitt nicht aneinander sondern sind durch den Bereich B getrennt.

Unter einer "verschiedenen" Materialbeschaffenheit ist zu verstehen, dass die Bereiche entweder aus verschiedenen Werkstoffen - insbesondere Kunststoffen - bestehen oder aus einem Werkstoff, der in verschiedener Konsistenz bzw. Beschaffenheit vorliegt, so insbesondere einmal in ungeschäumter Konsistenz - Bereiche A, C - und einmal in geschäumter Konsistenz - Bereich B.

Bevorzugt sind auch einer oder mehrere Randbereiche A, D, die einer erhöhten mechanischen Belastung unterliegen oder der Witterung ausgesetzt sind - vorzugsweise ungeschäumt ausgebildet - und der dazwischen liegende mittlere Bereich B geschäumt.

Hierdurch lässt sich eine verbesserte Wärmedämmung erreichen, denn lediglich in Randbereichen, in welchen das Dichtungsprofil im montierten Zustand einer erhöhten mechanischen Belastung unterworfen ist - wird der weniger gut wärmedämmende - dafür aber härtere ungeschäumte Werkstoff verwendet und in Bereichen, welche einer niedrigeren mechanischen Belastung unterliegen oder die weniger stark den Witterungseinflüssen ausgesetzt sind, das besser wärmedämmende, dafür aber weniger harte Werkstoff. Besonders vorteilhaft wird zum Erreichen einer guten Wärmedämmung zwischen der "Innen- und der Außenseite" der Dichtung ein Bereich C als Funktionsband derart in den Bereich des Dichtwulstes eingebettet, dass sich zwischen einer ersten Montageebene zum Profil hin und einer zweiten Montageebene zum Flächenelement hin jedenfalls abschnittsweise von der Profilseite zur Flächenelementseite eine Materialabfolge Hart - Weich - Hart ergibt.

Als Material für den weicheren und damit auch in der Regel besser wärmeisolierenden Bereich werden vorzugsweise geschäumte, Kunststoffe verwendet, insbesondere solche, die als geschlossenzelliges Moosgummi ausgebildet ist.

In Figur 1a ist angedeutet, dass die Dichtung im montierten Zustand an einer Seite an einem Flächenelement anliegt. Diese Seite ist durch die Montageebene I angedeutet. Auf der gegenüberliegenden Seite greift sie mit dem Haltefuß 2 in ein Profil. Hier liegt sie im Bereich einer Montageebene II an dem Profil an. Die Lage der Montageebene I und II entspricht nicht exakt den entsprechenden Montageebenen im montierten Zustand, denn im montierten Zustand wird die Dichtung komprimiert und verformt. Die Montageebenen I und II liegen aber dann parallel zu den in Figur 1a eingezeichneten Montageebenen.

Wie zu erkennen, ist die Anordnung der Bereiche verschiedener Materialbeschaffenheit wie folgt.

Der Haltefuß 2 und der sich direkt an den Haltefuß angrenzende Abschnitt 10 des Dichtwulstes 3 sind aus einem ersten Material hergestellt und bilden derart den Bereich A.

Der Abschnitt 10 des Bereiches A ist in den Bereich B eingebettet, der eine zweite Materialbeschaffenheit aufweist. Der Bereich B erstreckt sich von der Montageebene II aus vom ersten Bereich A in Richtung der Montageebene I.

In den Bereich B ist wiederum der Bereich C eingebettet, der vorzugsweise die gleiche Materialbeschaffenheit aufweist wie der Bereich A, und der zum Bereich A beabstandet liegt.

Nach Figur 1 a ist der Bereich C als Funktionsband 11 ausgebildet.

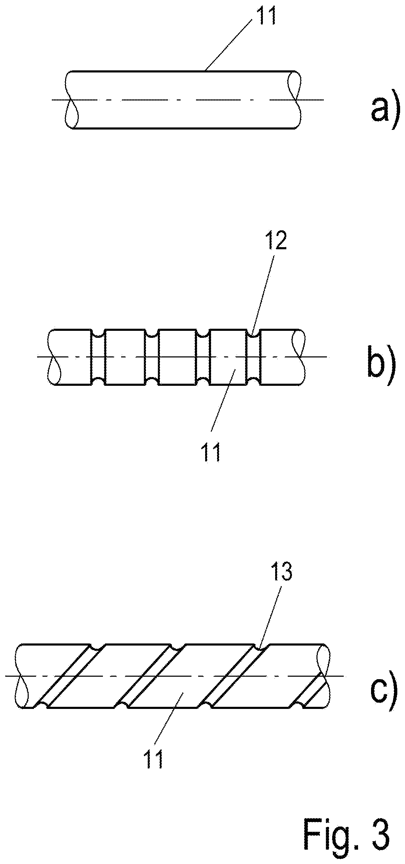

Beispiele derartiger Funktionsbänder 11 sind in Figur 3 abgebildet.

Das Funktionsband 11 kann entweder ein durchgehendes Band mit einem vorzugsweise kreisrunden, aber auch ggf. elliptischen oder mehreckigen Querschnitt bilden (Figur 3a) oder aber ein entsprechendes Band mit in axialer Richtung abschnittsweise ausgebildeten Formschlußmitteln, die nach dem Beispiel der Figur 3b als in axialer Richtung voneinander beabstandete ringförmige Nuten 12 ausgebildet sind und nach dem Beispiel der Figur 3c als wenigstens eine wendelförmige Nut 13.

Wird das Funktionsband 11 nach Art der Figur 3a, 3b, 3c ausgebildet, kann es nach einer Variante als separates, vorgefertigtes Band bei der Extrusion des Dichtungsprofils 1 ein- oder mitextrudiert werden. Alternativ kann es aber auch während der Fertigung durch ein gleichzeitiges Extrudieren (Koextrusion) im Extrusionswerkzeug mit ausgebildet werden.

Das Funktionsband 11 weist wenigstens einen Durchmesser von 2 mm auf. Vorzugsweise liegt der Durchmesser im Bereich von 2 bis 5 mm. Dieser Durchmesser bringt den besonderen Vorteil mit sich, dass das Funktionsband 11 derart bemessen ist, dass es nicht wie eine Schnur dünneren Durchmessers nur die Zugfestigkeit erhöht sondern auch quasi wie ein Druckübertragungswulst die Montage erleichtert und den Sitz der Dichtung im montierten Zustand optimiert, da eine gleichmäßige Druckverteilung zwischen den beiden Montageebenen I und II gewährleistet wird.

Die Varianten der Figuren 3b und 3c bringen durch die Ringnut 12 bzw. die Wendelnut 13 wie andere hier nicht dargestellte Ausführungsformen, den Vorteil mit sich, dass der ergänzende Formschluss zwischen dem Funktionsband und dem umgebenden Dichtmaterial des Bereiches B die Zugstabilität senkrecht zur Blattebene der Figur 1 weiter erhöht.

Im Gegensatz zu einem sich direkt an den Abschnitt C anschließenden Druckübertragungswulst, der sich weit in den Bereich des Dichtwulstes hinein erstreckt, bringt das Funktionsband 11 darüber hinaus den Vorteil mit sich, dass eine optimierte Wärmedämmung erreicht wird, da die Bereiche A und C durch den Bereich B voneinander getrennt sind.

Wie bereits ausgeführt, können die Bereiche A und C eine gleiche Materialbeschaffenheit aufweisen. So bietet es sich beispielsweise an, für diese Bereiche einen ersten, festeren Kunststoff zu verwenden. Für den Bereich B wird hingegen vorzugsweise ein geschäumter Kunststoff eingesetzt, der dafür aber eine bessere Wärmeisolierung hat.

Der Bereich der Dichtlippe 4, welche im montierten Zustand den Rand zum Flächenelement abdeckt, welcher für den Betrachter sichtbar ist, wird vorzugsweise ebenfalls aus einem härteren Material gefertigt. Dies ist in Figur 1a durch die Schraffur des Bereiches D angedeutet.

Der Bereich D umfasst die Dichtlippe 4 ganz oder teilweise und deckt vorzugsweise auch die Dichtung im gesamten Randbereich 15 zwischen den Montageebenen I und II zur Wetterseite hin nach Art eines Schutzüberzuges ab.

Wie bereits ausgeführt, liegt das Funktionsband 11, das den Bereich C ausgebildet, beabstandet zum Bereich A, bestehend aus dem Montagefuß und dem Abschnitt 10 der Dichtung. Vorzugsweise beträgt der Abstand X mindestens 1 mm oder mehr. Vorzugsweise ist eine Anordnung derart, dass der Abstand X mehr als 3 mm beträgt, um eine gute Wärmedämmung zu erreichen.

In Figur 1a ist der Bereich C bzw. das Funktionsband rundum vom Bereich B umgeben.

Darüber hinaus sind die Bereiche A und D voneinander getrennt.

Hiervon unterscheidet sich Figur 1b dadurch, dass das Funktionsband 11, welches den Bereich C ausbildet, nur auf einem Teil seines Umfangs in den Bereich B eingebettet ist. Zur Montageebene 1 hin bildet ein Teil des Außenumfangs des Funktionsbandes 11 direkt den Anlagebereich zum Flächenelement, d.h. das Funktionsband 11 liegt im montierten Zustand direkt an dem Flächenelement an, was die Dichtwirkung zum Flächenelement hin optimiert. Vorzugsweise ersetzt das Funktionsband 11 nach Art der Fig. 1b einen Teil des wellenförmigen Anlagebereiches 7.

Darüber hinaus erstreckt sich der Bereich A nach Fig. 1b bis in den Bereich der Dichtlippe 4 zur Anlage am Flächenelement. Die Bereiche A und D aus Figur 1 a sind hier quasi einstückig miteinander verbunden, was die Dichtung im Vergleich zu Figur 1 a stabiler, aber etwas weniger optimal wärmedämmend auslegt.

Das Ausführungsbeispiel der Figur 1c entspricht weitgehend dem Ausführungsbeispiel der Figur 1 a. Allerdings ist hier das Funktionsband 11, welches den Bereich C ausbildet, etwa mittig zwischen dem Bereich A und dem wellenförmigen Anlagebereich 7 in dem Bereich B des Dichtwulstes 3 ausgebildet.

Zudem weist der Bereich A im Abschnitt 10 zum Funktionsband hin eine kreissegmentartige, nutartige Vertiefung 14 auf. Bei der Montage bietet diese Vertiefung quasi einen Aufnahmebereich für das Funktionsband 11. Beim Komprimieren der Dichtung kann sich das Funktionsband quasi bis in die Vertiefung 14 legen.

Das Ausführungsbeispiel der Figur 1d entspricht wiederum weitestgehend dem Ausführungsbeispiel der Figur 1 b. Hier sind drei Bereiche A, B, C verschiedener Materialbeschaffenheit vorgesehen. Der Bereich A umfasst wiederum den Haltefuß 2, den Abschnitt 10, den Randbereich 15 senkrecht zu den Ebenen 1 und 2 zur Dichtlippe 4 hin und die Dichtlippe 4.

Anders als in Figur 1b bildet das Funktionsband 11 hier aber nur in einem sehr kleinen Bereich seines Außenmantels direkt einen Teil des wellenförmigen Anlagebereichs 7 aus.

Bei dem Ausführungsbeispiel der Figur 1e sind wiederum die Dichtlippe 4, der Randbereich 15 sowie der Dichtfuß und der Bereich 10 materialeinheitlich ausgebildet und bilden somit den Bereich A aus dem ersten härteren Material. Daran schließt sich der Bereich B aus dem weicheren, besser wärmeisolierenden Material an, in den hier das Funktionsband 11 ringsum vom Material des Bereiches B umgeben eingebettet ist.

Nach Figur 1f ist das Funktionsband nicht als Funktionsband mit einem kreisrunden Querschnitt ausgebildet sondern als Funktionsband 11', welches zur Scheibe hin einen Teil des wellenförmigen Anlagebereiches 7 ausbildet und zur Innenseite hin, die sich im Bereich B aus einem besser wärmeisolierenden Material erstreckt, im Wesentlichen rechtwinklig bzw. U-förmig ausgebildet ist.

Die Dichtlippe 5, die auch als Anlagesteg bezeichnet werden kann, besteht bei den hier dargestellten Ausführungsbeispielen jeweils aus dem Material des Bereiches B bzw. ist mit dem Bereich B materialeinheitlich ausgebildet.

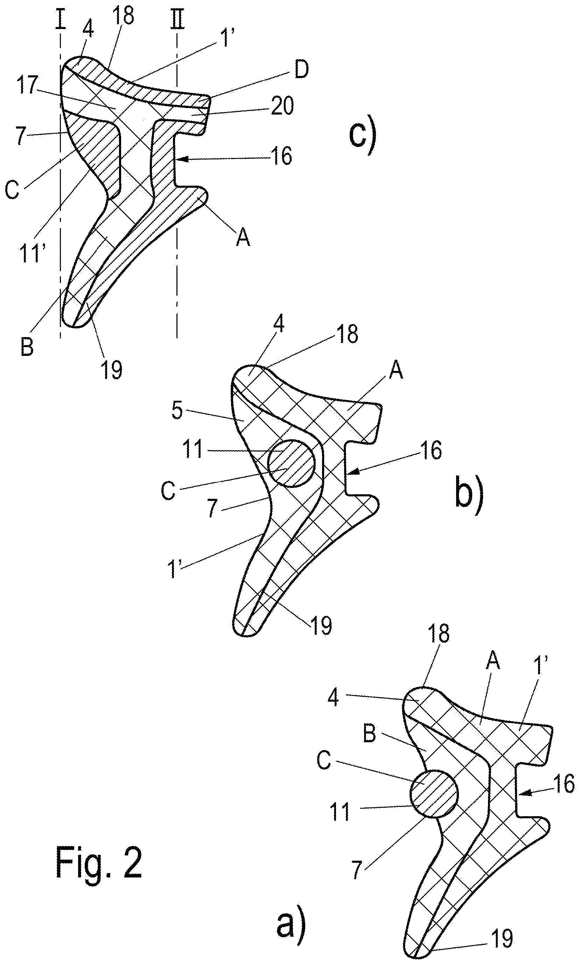

Die Figuren 2a bis 2c zeigen weitere Ausführungsbeispiel von Dichtungen, bei denen aber der Dichtwulst nicht wie in Figur 1 eine nahezu quadratische, rechteckige Außenform aufweist, sondern eher eine C-förmige Außenform.

Die Dichtung 1' weist eine als Montagemittel zur Montage an einem Profil oder dgl. dienende Montageausnehmung 16 auf.

Die Montageausnehmung 16 ist im Bereich eines Dichtwulstes 17 ausgebildet. Dieser Dichtwulst 17 weist auf einer Seite einen Randbereich 18 auf und auf der gegenüberliegenden Seite eine Dichtlippe 19.

Auch diese Dichtung besteht aus wenigstens drei Bereichen A, B, C und D, von denen jeweils ein Bereich B eine andere Materialbeschaffenheit aufweist als die übrigen Materialbereiche A, C, D.

Auch hier ist die Anordnung derart, dass zur einen Montageebene II am Profil vorzugsweise der Bereich A mit härterer Konsistenz ausgebildet ist, an den sich von der Montageebene II aus in Richtung zur Montageebene I am Flächenelement der Bereich B aus einem weicheren, vorzugsweise geschäumten Material anschließt, in den dann zum Bereich A beabstandet ein Bereich C als Funktionsband 11 ausgebildet ist. Dieses Funktionsband 11 ist entweder vollständig in den Bereich B eingebettet (Fig. 2b) ist oder derart abschnittsweise eingebettet, dass das Funktionsband 11 im montierten Zustand direkt selbst am Flächenelement zur Anlage kommt.

Nach Figur 2a und 2b ist das Funktionsband 11 jeweils in bevorzugter Variante als kreisrundes Funktionsband ausgebildet, welches beispielsweise nach Art der Figur 3 ausgestaltet sein kann.

Nach Figur 2c weist das Funktionsband hingegen einen nicht kreisrunden Querschnitt auf.

Insbesondere nach Figuren 1f und 2c in nichtkreisrunder Ausgestaltung wird das Funktionsband 11' gleichzeitig mit dem übrigen Dichtungsprofil koextrudiert. In diesem Fall werden vorzugsweise für das Funktionsband als Bereich C und die übrigen Bereiche A und B die gleichen Materialien verwendet, die aber einmal in ungeschäumtem Zustand (Bereich A und C und ggf. D) und einmal im geschäumten Zustand (Bereich B) verarbeitet werden.

Nach Figur 2 kann der Bereich A quasi bogenförmig den gesamten Abschnitt der Halteaufnahme 16 sowie die Randbereiche der Dichtlippen des Dichtungsprofils umfassen. Der Bereich A kann aber auch geteilt werden, so dass sich Bereiche A und D ausbilden (Figur 1 c), zwischen denen ein Steg 20 aus dem Material des Bereiches B liegt.

Insgesamt ergibt sich eine optimierte thermische Trennung durch die "schwimmend" eingebrachten Funktionsbänder 11, 11'.

Neben der verbesserten thermischen Trennung im Vergleich zu einem sich weit in den Dichtfuß hinein erstreckenden Materialwulst bzw. Materialbereich aus härterem Material bietet das Funktionsband auch den Vorteil einer guten Montierbarkeit, da sich das Funktionsband bei der Montage als Druckbereich zum Aufbringen von Druck auf dem Befestigungsfuß abstützt.

Bei einer Außenkonturangleichung des Funktionsbandes am Anlagebereich zu Flächenelement derart, dass das Funktionsband direkt ein Teil der Anlagefläche zum Flächenelement hin bildet, wird ferner die Dichtwirkung erhöht.

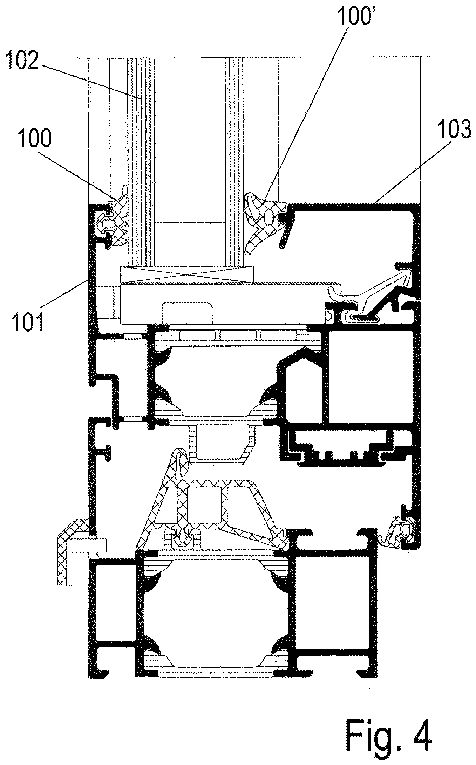

Fig. 4 veranschaulicht die Position von Dichtungsprofilen 1 und 1 nach Art der Fig. 1 oder 2 anhand einer Schnittansicht eines Fensterabschnitts.

Ein Fensterflügel weist ein Außenprofil 101 und ein Innenprofil 103 sowie ein Flächenelement 102 auf, welches als Isolierglasscheibe ausgebildet ist.

Zwischen dem Außenprofil 101 und dem Flächenelement 102 ist eine Dichtung 100 angeordnet, deren Anordnung jener der Dichtungen 1 in montierter Position entspricht.

Zwischen dem Innenprofil 103 und dem Flächenelement 102 ist eine Dichtung 100' angeordnet, welche die Dichtung 1' in montierter Position ersetzen kann, wobei die dargestellten Dichtungen 100, 100' aber jeweils eine einheitliche Materialbeschaffenheit aufweisen.

### Bezugszeichen

- Dichtungsprofil: 1
- Haltefuß: 2
- Dichtwulst: 3
- Dichtlippe: 4, 5
- Anlagebereich: 7
- Hohlkammer: 9
- Abschnitt: 10
- Funktionsband: 11, 11'
- Nut: 12
- Nut: 13
- Vertiefung: 14
- Randbereich: 15
- Montageausnehmung: 16
- Dichtwulst: 17
- Randbereich: 18
- Dichtlippe: 19
- Steg: 20

- Bereiche: A, B, C, D
- Montageebenen: I, II

## Patentansprüche

1. Dichtungsprofil (1, 1'), insbesondere zur Einfassung von Flächenelementen, wie Isolierglasscheiben an einem Rahmen, welches strangförmig ausgebildet ist, und folgendes aufweist:
a. einen an einem Profil festlegbaren Montagebereich, der als Haltefuß (2) oder Halteausnehmung (16) ausgebildet ist,
b. einen an das Flächenelement anlegbaren Dichtwulst (3, 17),
c. wenigstens eine Dichtlippe (4),
d. wobei zumindest der Montagebereich und zumindest ein Teil des Dichtwulstes (3) einen ersten Bereich (A) mit einer ersten Materialbeschaffenheit bilden, an den sich direkt ein zweiter Bereich (B) mit einer zweiten Materialbeschaffenheit anschließt,
e. wobei sich der erste Bereich (A) mit der ersten Materialbeschaffenheit bis in den Bereich der wenigstens einen Dichtlippe (4) erstreckt oder wobei der Bereich der Dichtlippe (4) und vorzugsweise ein Bereich einer Außenkante (15, 18), die im montierten Zustand ganz oder teilweise der Witterung ausgesetzt ist, als dritter Bereich (D) ausgebildet sind, der eine größere Härte aufweist als der zweite Bereich (B) des Dichtwulstes mit der zweiten Materialbeschaffenheit, **dadurch gekennzeichnet, dass**
f. in den zweiten Bereich (B) des Dichtwulstes (3, 17) mit der zweiten Materialbeschaffenheit wenigstens ein sich mit dem Dichtungsprofil in dessen Haupterstreckungsrichtung erstreckendes Funktionsband (11) eingebettet ist, das einen vierten Bereich (C) ausbildet, der eine zum zweiten Z Bereich (B) mit der zweiten Materialbeschaffenheit unterschiedliche Materialbeschaffenheit und einen Durchmesser von wenigstens 2 mm aufweist,
g. wobei das Funktionsband (11, 11') in den zweiten Bereich (B) derart eingebettet ist, dass es ringsum vom Material des zweiten Bereichs (B) umgeben ist, oder dass das Funktionsband (11,11') in den zweiten Bereich (B) derart eingebettet ist, dass es auf einem Teil seines Außenumfangs vom Material des Z zweiten Bereichs (B) umgeben ist und dass es in einem weiteren Teil seines Außenumfangs direkt einen Teil der Außenkontur des Dichtungsprofils (1, 1') ausbildet, und
h. das Funktionsband (11, 11') als vierter Bereich (C) härter ist als der zweite Bereich (B), in welchen es eingebettet ist.

2. Dichtungsprofil nach Anspruch 1, **dadurch gekennzeichnet, dass** das Funktionsband (11) als vierter Bereich (C) die gleiche Materialbeschaffenheit aufweist wie der erste Bereich (A), in welchem der Montagefuß (2) liegt.

3. Dichtungsprofil nach Anspruch 1 oder 2, **dadurch gekennzeichnet, dass** das Funktionsband (11, 11') einen kreisrunden Querschnitt aufweist.

4. Dichtungsprofil nach Anspruch 1 oder 2, **dadurch gekennzeichnet, dass** das Funktionsband (11, 1') einen nicht kreisrunden Querschnitt aufweist.

5. Dichtungsprofil nach Anspruch 1 oder 2, **dadurch gekennzeichnet, dass** das Funktionsband (11, 11') in axialer Richtung - d.h. in Haupterstreckungsrichtung des Dichtungsprofils - einen nicht regelmäßigen Querschnitt aufweist.

6. Dichtungsprofil nach einem der vorstehenden Ansprüche , **dadurch gekennzeichnet, dass** das Funktionsband (11, 11') derart in den zweiten Bereich (B) des Dichtwulstes eingebettet ist, dass sich zwischen einer ersten Montageebene (II) zum Profil hin und einer zweiten Montageebene (I) zum Flächenelement hin jedenfalls abschnittsweise von der Profilseite zur Flächenelementseite eine Materialabfolge Hart - Weich - Hart ergibt.

7. Dichtungsprofil nach einem der vorstehenden Ansprüche, **dadurch gekennzeichnet, dass** das Funktionsband, in dem Bereich seines Außenumfangs, in dem es direkt einen Teil der Außenkontur des Dichtungsprofils ausbildet, auch einen Teil des Anlagebereichs (7) ausbildet, der im montierten Zustand der Dichtung an dem Flächenelement zur Anlage kommt.

8. Dichtungsprofil nach einem der vorstehenden Ansprüche, **dadurch gekennzeichnet, dass** das Funktionsband (11, 11') als vor der Extrusion des Dichtungsprofils hergestelltes, vorgefertigtes Band ausgebildet ist, welches bei der Extrusion des Dichtungsprofils in dieses eingebettet ist.

9. Dichtungsprofil nach einem der vorstehenden Ansprüche, **dadurch gekennzeichnet, dass** das Funktionsband erst bei der Extrusion des Dichtungsprofils durch Koextrusion in diesem ausgebildet ist.

10. Dichtungsprofil nach einem der vorstehenden Ansprüche, **dadurch gekennzeichnet, dass** der erste Bereich (A) und der vierte Bereich (C) und ggf. der dritte Bereich (D) mit der ersten härteren Materialbeschaffenheit aus einem thermoplastischen Elastomer, insbesondere EPDM, bestehen.

11. Dichtungsprofil nach einem der vorstehenden Ansprüche, **dadurch gekennzeichnet, dass** der zweite Bereich (B) mit der zweiten, im Vergleich zur ersten Materialbeschaffenheit weicheren Materialbeschaffenheit aus einem geschäumten Material und/oder Moosgummi, besteht.

12. Dichtungsprofil nach einem der vorstehenden Ansprüche, **dadurch gekennzeichnet, dass** ein Abstand (X) zwischen dem Funktionsband (11) und dem ersten Bereich (A) mit der ersten Materialbeschaffenheit mindestens 1 mm oder mehr beträgt.

13. Fensterelement wie ein Flügel oder eine Festverglasung oder eine Tür oder ein Fassaden- oder Lichtdachelement, mit wenigstens einem Profil (101, 103), einem Flächenelement (102) und einem Dichtungsprofil (1, 1') nach einem der auf dieses gerichteten Ansprüche 1 bis 12, welches zwischen dem Profil und dem Flächenelement angeordnet ist.

## Claims

1. A sealing profile (1, 1'), especially for enclosing flat elements such as insulating glass panes on a frame, which profile is formed in a strand-shaped manner, and comprises the following:
a) a mounting area which can be fixed to a profile and is formed as a retaining base (2) or a retaining recess (16),
b) a sealing bead (3, 17) which can be placed on the surface element,
c) at least one sealing lip (4),
d) wherein at least the mounting area and at least a portion of the sealing bead (3) form a first region (A) with a first material composition which is directly adjoined by a second region (B) with a second material composition,
e) wherein the first region (A) the first material composition extends up into the region of the at least one sealing lip (4), or wherein the region of the sealing lip (4) and preferably a region of an outer edge (15, 18), which are subjected to weathering in full or in part in the mounted state, are formed as a third region (D) which has a greater hardness than the second region (B) of the sealing bead with the second material composition,
**characterized in that**
f) at least one functional band (11) which extends with the sealing profile in its main direction of extension is embedded in the second region (B) of the sealing bead (3, 17) with the second material composition, which functional band forms a fourth region (C) which has a material composition which differs from the second region (B) with the second material composition and has a diameter of at least 2 mm,
g) wherein the functional band (11, 11') is embedded in the second region (B) in such a way that it is surrounded circumferentially by material of the second region (B), or that the functional band (11,11') is embedded in the second region (B) in such a way that it is surrounded over a portion of its outer circumference by material of the second region (B), and that in a further portion of its outer circumference it directly forms a portion of the outer contour of the sealing profile (1, 1'), and
h) the functional band (11,11'), as the fourth region (C), is harder than the second region (B) in which it is embedded.

2. A sealing profile according to claim 1, **characterized in that** the functional band (11), as the fourth region (C), has the same material composition as the first region (A) in which the mounting base (2) is disposed.

3. A sealing profile according to claim 1 or 2, **characterized in that** the functional band (11, 11') has a circular cross-section.

4. A sealing profile according to claim 1 or 2, **characterized in that** the functional band (11, 11') has a non-circular cross-section.

5. A sealing profile according to claim 1 or 2, **characterized in that** functional band (11, 11') has a non-regular cross-section in the axial direction, i.e. in the direction of the main extension of the sealing profile.

6. A sealing profile according to one of the preceding claims, **characterized in that** the functional band (11, 11') is embedded in such a way in the second region (B) of the sealing bead that between a first mounting plane (II) towards the profile and a second mounting plane (I) towards the flat element a material sequence of hard, soft, hard is obtained anyway in sections from the profile side to the flat element side.

7. A sealing profile according to one of the preceding claims, **characterized in that** the functional band, in the region of its outer circumference in which it directly forms a portion of the outer contour of the sealing profile, also forms a portion of the contact region (7) which in the mounted state of the seal rests on the flat element.

8. A sealing profile according to one of the preceding claims, **characterized in that** the functional strip (11,11') is formed as a prefabricated band which is produced before the extrusion of the sealing profile and which is embedded in said profile during the extrusion thereof.

9. A sealing profile according to one of the preceding claims, **characterized in that** the functional band is only formed during the extrusion of the sealing profile by co-extrusion in said profile.

10. A sealing profile according to one of the preceding claims, **characterized in that** the first region (A) and the fourth region (C) and optionally the third region (D) with the first harder material composition consist of a thermoplastic elastomer, especially EPDM.

11. A sealing profile according to one of the preceding claims, **characterized in that** the second region (B) with the second material composition which is softer in comparison with the first material composition consists of a foamed material and/or cellular rubber.

12. A sealing profile according to one of the preceding claims, **characterized in that** a distance (X) between the functional band (11) and the first region (A) the first material composition is at least 1 mm or more.

13. A window element such as a wing or fixed glazing or a door or a facade or glazed roof element, comprising at least one profile (101, 103), a flat element (102) and a sealing profile (1, 1') according to one of the claims 1 to 12 directed thereto, which is arranged between the profile and the flat element.

## Revendications

1. Profilé d'étanchéité (1, 1'), en particulier pour entourer des éléments de surface tels que des vitrages isolants sur un cadre, qui est réalisé en forme de barre et comprend :
a. une zone de montage pouvant être fixée à un profilé et conformée comme un pied de rétention (2) ou un creux de rétention (16),
b. un bourrelet d'étanchéité (3, 17) qui peut être appuyé contre l'élément de surface,
c. au moins une lèvre d'étanchéité (4),
d. la zone de montage au minimum et au moins une partie du bourrelet d'étanchéité (3) formant une première zone (A) ayant une première texture de matériau, à laquelle se raccorde directement une deuxième zone (B) ayant une deuxième texture de matériau,
e. la première zone (A) ayant la première texture de matériau s'étendant jusqu'à la zone de l'au moins une lèvre d'étanchéité (4) ou la zone de la lèvre d'étanchéité (4) et de préférence une zone d'un bord extérieur (15, 18) exposée entièrement ou partiellement aux intempéries dans l'état monté étant construites comme une troisième zone (D) qui présente une plus grande dureté que la deuxième zone (B) du bourrelet d'étanchéité ayant la deuxième texture de matériau,
**caractérisé en ce que**
f. au moins une bande fonctionnelle (11) qui s'étend avec le profilé d'étanchéité dans le sens d'étendue principal de celui-ci est incluse dans la deuxième zone (B) du bourrelet d'étanchéité (3, 17) ayant la deuxième texture de matériau et forme une quatrième zone (C) qui présente une texture de matériau différente de la deuxième zone (B) ayant la deuxième texture de matériau et a un diamètre d'au moins 2 mm,
g. la bande fonctionnelle (11, 11') étant incluse dans la deuxième zone (B) de telle manière qu'elle est environnée sur tout le tour par le matériau de la deuxième zone (B), ou
**en ce que** la bande fonctionnelle (11, 11') est incluse dans la deuxième zone (B) de telle manière qu'elle est environnée sur une partie de sa circonférence extérieure par le matériau de la deuxième zone (B) et **en ce qu'**elle forme directement, dans une autre partie de sa circonférence extérieure, une partie du contour extérieur du profilé d'étanchéités (1, 1'), et
h. la bande fonctionnelle (11, 11') formant la quatrième zone (C) est plus dure que la deuxième zone (B) dans laquelle elle est incluse.

2. Profilé d'étanchéité selon la revendication 1, **caractérisé en ce que** le ruban fonctionnel (11) formant la quatrième zone (C) a la même texture de matériau que la première zone (A) dans laquelle se trouve le joint de montage (2).

3. Profilé d'étanchéité selon la revendication 1 ou 2, **caractérisé en ce que** le ruban fonctionnel (11, 11') présente une section circulaire.

4. Profilé d'étanchéité selon la revendication 1 ou 2, **caractérisé en ce que** le ruban fonctionnel (11, 11') présente une section non circulaire.

5. Profilé d'étanchéité selon la revendication 1 ou 2, **caractérisé en ce que** le ruban fonctionnel (11, 11') présente une section non régulière dans le sens axial, c'est-à-dire dans le sens d'étendue principal du profilé d'étanchéité.

6. Profilé d'étanchéité selon l'une des revendications précédentes, **caractérisé en ce que** le ruban fonctionnel (11, 11') est inclus dans la deuxième zone (B) du bourrelet d'étanchéité de telle façon qu'il se crée entre un premier plan de montage (II) tourné vers le profilé et un deuxième plan de montage (I) tourné vers l'élément de surface, au moins en partie vers le côté de l'élément de surface, une succession de matériaux dur-souple-dur.

7. Profilé d'étanchéité selon l'une des revendications précédentes, **caractérisé en ce que** le ruban fonctionnel forme aussi, dans la zone de sa circonférence extérieure dans laquelle il forme directement une partie du contour extérieur du profilé d'étanchéité, une partie de la zone d'appui (7) qui vient s'appuyer sur l'élément de surface dans l'état monté du joint.

8. Profilé d'étanchéité selon l'une des revendications précédentes, **caractérisé en ce que** le ruban fonctionnel (11, 11') est conformé comme un ruban préfabriqué produit avant l'extrusion du profil d'étanchéité, qui est inclus dans le profilé d'étanchéité lors de l'extrusion de celui-ci.

9. Profilé d'étanchéité selon l'une des revendications précédentes, **caractérisé en ce que** le ruban fonctionnel n'est formé que lors de l'extrusion du profilé d'étanchéité par coextrusion dans celui-ci.

10. Profilé d'étanchéité selon l'une des revendications précédentes, **caractérisé en ce que** la première zone (A) et la quatrième zone (C) et éventuellement la troisième zone (D) ayant la première texture de matériau plus dure se composent d'un élastomère thermoplastique, en particulier d'EPDM.

11. Profilé d'étanchéité selon l'une des revendications précédentes, **caractérisé en ce que** la deuxième zone (B) ayant la deuxième texture de matériau plus souple que la première texture de matériau se compose d'un matériau en mousse et/ou de caoutchouc mousse.

12. Profilé d'étanchéité selon l'une des revendications précédentes, **caractérisé en ce qu'**une distance (X) entre le ruban fonctionnel (11) et la première zone (A) ayant la première texture de matériau est d'au moins 1 mm ou davantage.

13. Élément de fenêtre tel qu'un battant ou un vitrage fixe ou une porte ou un élément de façade ou de lucarne de toit, avec au moins un profilé (101, 103), un élément de surface (102) et un profilé d'étanchéité (1, 1') selon l'une des revendications 1 à 12 concernant celui-ci, qui est disposé entre le profilé et l'élément de surface.
